# EUROPÄISCHE PATENTSCHRIFT

(11) **EP 0 593 864 B1**
(45) Veröffentlichungstag und Bekanntmachung des Hinweises auf die Patenterteilung: **05.11.1997**
(21) Anmeldenummer: 93112212.1
(22) Anmeldetag: 30.07.1993
(51) Int. Cl.: C08J 9/02, C08L 83/04, C08J 9/00

(54) **Verfahren zum Herstellen eines feinporigen Siliconschaumes**
Process for producing a finely porous silicone foam
Procédé de préparation d'une mousse de silicone à pores fins

(30) Priorität: 22.10.1992 DE 4235638
(43) Veröffentlichungstag der Anmeldung: 27.04.1994
(73) Patentinhaber: ERNST SONDERHOFF GmbH & Co. KG, D-50829 Köln (DE)
(72) Erfinder: Giesen, Franz-Josef, D-50129 Bergheim (DE)
(74) Vertreter: Vollbach, Hans, Dipl.-Ing.

(56) Entgegenhaltungen:
- FR-A- 2 575 086
- CHEMICAL ABSTRACTS, vol. 105, no. 14, 6. Oktober 1986, Columbus, Ohio, US; abstract no. 116363m, NAKAMURA AKITO & AL. 'Curable polyorganosiloxane compositions'

## Beschreibung

Die Erfindung betrifft ein Verfahren zum Herstellen eines feinporigen Siliconschaumes im Freischäumungsverfahren des Zweikomponenten-Schaumstoffreaktionsgemischs, wobei als Reaktionskomponente A eine Siliconmasse, enthaltend
Siliconpolymer mit mindestens zwei Doppelbindungen pro Molekül, vorzugsweise Vinylgruppen,
einen organischen Platin-Katalysator
pyrogene Kieselsäure,
Wasser
und gegebenenfalls weitere Additive, einzeln oder in Kombination, wie vor allem Farbpigment, Schaumregulatoren, Flammschutzmittel und Füllstoff
und als Vernetzerkomponente B eine solche mit Polydimethylhydrogensiloxan verwendet wird, wobei das aus den Reaktionskomponenten bestehende Schaumstoffreaktionsgemisch mit in ihm enthaltenem gas als Nucleierungsmittel zur Aufschäumung gebracht wird.

Siliconschäume verfügen gegenüber den anderen bekannten Schaumstoffen, wie z.B. Polyurethanschaum, PVC-Schaum oder Chloroprenschaum, über eine Reihe von günstigen Eigenschaften, die eine vielfältige Verwendung dieser Schäume ermöglichen. Zu diesen Eigenschaften gehören vor allem:
- UV-Beständigkeit
- Salzwasserbeständigkeit
- physiologische Unbedenklichkeit
- Geruchslosigkeit
- hoher Tragekomfort (bei Verwendung als oder an Bekleidungsstücken)
- chemische Resistenz
- Alterungsbeständigkeit
- Dichtigkeit gegenüber Flüssigkeiten
- Atmungsaktivität (gasdurchlässig)
- geringe Brennbarkeit
- niedrige Schaumdichte

Aus der EP 0 416 229 A2 ist ein Verfahren zum Herstellen eines feinporigen, weich-elastischen Dichtungsschaumes für Deckel-, Gehäuse- und Hohlraumdichtungen bekannt, bei dem die Schaumstoff-Reaktionskomponenten mittels einer Niederdruck-Zweikomponenten-Misch- und Dosieranlage verarbeitet und im Freischäumungsverfahren ohne Wärmezufuhr zur Aufschäumung gebracht werden, wobei die eine Reaktionskomponente ein Siliconpolymer mit mindestens zwei Doppelbindungen im Molekül, vorzugsweise Vinylgruppen, einen organischen Platin-Katalysator sowie gegebenenfalls weitere Zusätze enthält, während die andere Komponente von stoffsiloxan als Vernetzer gebildet wird, wobei dem tionsgemisch als zusätzliches Vernetzungs- und Treibmittel Wasser in einer geringen Menge zugesetzt wird. Die Zugabe von Wasser bewirkt, daß beim Ausschäumen der Siliconmasse das Wasserstoffsiloxan praktisch vollständig zur Reaktion gebracht wird, so daß sich ein hoher Wasserstoff-Treibeffekt einstellt und die Nachreaktion mit schädlichen Auswirkungen auf die Qualität des Siliconschaumes vermieden wird.

Die Erfindung geht von Siliconmassen aus, bei denen als Treibmittel Wasser und als Vernetzerkomponente Wasserstoffsiloxan verwendet wird. Aufgabe der Erfindung ist es, in einem betriebsmäßig gut beherrschbaren Verfahren aus einem Zweikomponenten-additionsvernetzenden-Siliconsystem mit verlängerter Topf- bzw. Verarbeitungszeit (modifizierte LSR-Qualität) einen hochwertigen und feinporigen Siliconschaum preisgünstig herzustellen, vorzugsweise in Form von Schaumstoffbahnen, der in der Praxis vielfältige Anwendung finden kann.

Diese Aufgabe wird nach erfindungsgemäßen Verfahren durch folgende Merkmale gelöst:
- Die Komponente A enthält einen mit Butinol komplexierten organischen Platin-Katalysator, während die Vernetzerkomponente B zusätzlich Siliconpolymer mit mindestens zwei Doppelbindungen pro Molekül, vorzugsweise Vinylgruppen sowie pyrogene Kieselsäure enthält,
- Druckgasbeaufschlagung des aus den Komponenten A und B bestehenden Reaktionsgemischs in einem Vorratsbehälter, so daß sich das zugeführte Gas im Reaktionsgemisch gelöst befindet, und daß das Reaktionsgemisch mit dem in ihm gelösten Druckgas nachfolgend aus dem Vorratsbehälter abgezogen und unter Erwärmung auf eine Temperatur von 150°- 220°C zur Aufschäumung gebracht wird.

Vorzugsweise werden bei dem erfindungsgemäßen Verfahren Komponenten A und B folgender Zusammensetzung verwendet:

| Komponente A : | |
|---|---|
| 100 g | Siliconpolymer mit mindestens zwei Doppelbindungen pro Molekül, vorzugsweise Vinylgruppen |
| | |
| 0,2-5 g | organischer Platin-Katalysator, komplexiert mit Butinol, |
| | |
| 5-40 g | pyrogene Kieselsäure, |
| | |
| 0,05-5 g | Wasser, |

gegebenenfalls weitere Additive, einzeln oder in Kombination, wie vor allem Farbpigment (z.B. Ruß, Eisenoxidrot), Schaumregulatoren (z.B. Fluortenside), Flammschutzmittel und Füllstoffe (z.B. Quarzmehl).

| Komponente B: | |
|---|---|
| 100 g | Siliconpolymer mit mindestens zwei Doppelbindungen pro Molekül, vorzugsweise Vinylgruppen, |
| | |
| 5-40 g | pyrogene Kieselsäure, |
| | |
| 3-20 g | Polydimethylhydrogensiloxan (SiH Vernetzer) |

Die vorgenannten Komponenten A und B können im Mischungsverhältnis von 1 : 1 verarbeitet werden und besitzen bei diesem Mischungsverhältnis eine Topfzeit von mindestens drei Tagen bei 20°C. Die Viskosität der beiden Komponenten liegt etwa bei 100.000 mPa.s.

Als Siliconpolymer kann für beide Komponenten A und B mit Vorteil Fluorsiliconpolymer verwendet werden.

Bei dem erfindungsgemäßen Verfahren erfolgt die Verarbeitung der hochviskosen Siliconmasse im Viskositätsbereich von 30.000 bis 500.000 mPa.s, wodurch sich ein hochwertiger-, mechanisch gut belastbarer Siliconschaum erhalten läßt.

Die Verwendung des mit Butinol komplexierten organischen Platin-Katalysators verhindert eine vorzeitige Verschäumungsaktion des Reaktionsgemischs und ermöglichst daher problemlos eine Lagerung des Reaktionsgemischs bzw. deren Druckgasbeaufschlagung über eine längere Zeitspanne hinweg, die mindestens zwei Stunden betragen sollte, im allgemeinen aber erheblich länger sein kann, je nachdem mit welchen Beaufschlagungsdrücken gearbeitet wird. Im allgemeinen empfiehlt es sich, das Gemisch aus den beiden Komponenten A und B mit einem Gasdruck von mindestens 5-10 bar zu beaufschlagen.

Das über eine längere Zeitdauer von mehreren Stunden mit dem Druckgas beaufschlagte Reaktionsgemisch enthält das Gas fein verteilt in gelöster Form, so daß es bei der nachfolgenden Ausschäumungsreaktion zur Schaumnukleierung wirksam werden kann. Als Druckgas wird schon aus Kostengründen vorzugsweise Druckluft oder komprimierter Stickstoff verwendet, obwohl auch andere Gase, wie vor allem Edelgase, eingesetzt werden können. Ohne die Aufnahme des gelösten Gases im Reaktionsgemisch würde sich keine Verschäumungsreaktion mit der angestrebten feinporigen Schaumbildung einstellen.

Das mit dem gelösten Gas versetzte Reaktionsgemisch wird zweckmäßig im Flächenauftrag zur Verschäumung gebracht. Dabei kann die für den Verschäumungsprozeß notwendige Erwärmung des Reaktionsgemischs mit Vorteil im Durchlauf durch einen Durchlaufofen o.dgl. erfolgen.

Die beiden genannten Komponenten A und B werden zweckmäßig so hergestellt, daß sie jeweils frei von Luftblasen sind. Sie werden vor der Druckgasbeaufschlagung zweckmäßig so vermischt, daß es hierbei zu keinen Einschlüssen von Luftblasen im Gemisch kommen kann. Dies kann durch statisches Vermischen unter Luftabschluß erfolgen,z.B. beim Durchgang durch ein Mischrohr, eine Mischschnecke o.dgl. Enthält die Siliconmasse Luftblasen, wie sie z.B. durch einfaches Verrühren der beiden Komponenten A und B in einem offenen Mischgefäß auftreten können, so entsteht ein mehr oder weniger blasriger oder löchriger Siliconschaum, der für die verschiedenen Verwendungszwecke ungeeignet ist. Die Aufnahme gelöster Luft (oder eines sonstigen Gases) ohne die Anwesenheit von Luftblasen im Reaktionsgemisch garantiert dagegen die Entwicklung eines qualitativ hochwertigen Siliconschaums mit hoher Feinzelligkeit und Gleichmäßigkeit.

Falls das aus den beiden Komponenten hergestellte Reaktionsgemisch Luftblaseneinschlüsse enthält, empfiehlt es sich daher, das Gemisch vor der Druckgasbeaufschlagung durch Vakuumbehandlung zu entlüften.

Das von Luftblaseneinschlüssen freie, aber mit dem gelösten Gas versetzte Reaktionsgemisch wird zweckmäßig im Rakel- oder Streichverfahren mit der gewünschten Schichtdicke flächig aufgetragen, wobei es z.B. im Durchlaufofen auf eine Teperatur von 150 °- 220°C erwärmt wird. Die Schäumungs- und Verfestigungsreaktion erfolgt dann je nach der Schichtdicke des Reaktionsgemischs und je nach der Beschaffenheit des es tragenden Basisgrundkörpers innerhalb von etwa 0,5 - 5 Minuten. Da bei der Verschäumung Wasserstoff durch chemische Reaktion freigesetzt wird, empfiehlt es sich, einen Durchlauftrockner bzw. Durchlaufofen mit einer Frisch-Umluftregelung zu verwenden, die durch Wasserstoffdetektoren gesteuert werden kann. Das Reaktionsgemisch kann auch auf eine Unterlage, wie vor allem auf ein Metallblech, eine Metallfolie, z.B. eine Aluminiumfolie, auf ein Gewebeband, z.B. PTFE Gewebeband, aufgetragen und zur Verschäumung gebracht werden, wobei im Bedarfsfall ein Haftvermittler (Silan-Haftvermittler) eingesetzt werden kann, um einen festen Verbund des Siliconschaums der Unterlage zu erhalten. Auch kann der Siliconschaum mit Vorteil zu einer Schaumstoffbahn verarbeitet werden, die sich zweckmäßig unter Einlegen einer Trennfolie zu einer Rolle aufwickeln läßt. Die üblichen Schichtdicken des Siliconschaumes liegen bei 2 - 30 mm. Die Rohdichte des Siliconschaumes beträgt im allgemeinen 0,2 - 0,8 g/ccm. Aus dem nach dem erfindungsgemäßen Verfahren hergestellten, z.B. zu einer Rolle aufgewickelten oder in Blöcken geschnitten Siliconschaum lassen sich z.B. hochwertige Dichtungen, durch Kaschierung mit Aluminiumfolie Hitzeschilder oder durch Kaschierung mit flexiblem Gewebe Inneneinsätze für Bekleidungsstücke, insbesondere für Surf- oder Taucheranzüge u.dgl. herstellen. Im übrigen ist der nach dem erfindungsgemäßen Verfahren hergestellte Siliconschaum aufgrund seiner hohen Schaumstoffqualität und seiner preisgünstigen Herstellungsweise für viele andere Zwecke verwendbar. Auch ist es möglich, die nach dem erfindungsgemäßen Verfahren hergestellten Siliconschäume bzw. Silicon-Schaumstoffbahnen auch beidseitig zu kaschieren.

## Patentansprüche

1. Verfahren zum Herstellen eines feinporigen Siliconschaumes im Freischäumungsverfahren des Zweikomponenten-Schaumstoffreaktionsgemischs, wobei als Reaktionskomponente A eine Siliconmasse, enthaltend,
- Siliconpolymer mit mindestens zwei Doppelbindungen pro Molekül, vorzugsweise Vinylgruppen,
- organischer Platin-Katalysator,
- pyrogene Kieselsäure,
- Wasser,
- und ggf. weitere Additive,
und als Vernetzerkomponente B eine solche mit Polydimethylhydrogensiloxan (SiH-Vernetzer) verwendet wird, wobei das aus den Reaktionskomponenten bestehende Schaumstoffreaktionsgemisch mit in ihm enthaltenem Gas als Nucleierungsmittel zur Aufschäumung gebracht wird, **dadurch gekennzeichnet, daß** für den organischen Platin-Katalysator der komponente A ein mit Butinol komplexierter organischer Platin-Katalysator verwendet wird, während die Vernetzerkomponente B zusätzlich Siliconpolymer mit mindestens zwei Doppelbindungen pro Molekül, vorzugsweise Vinylgruppen, und pyrogene Kieselsäure enthält, daß das aus den Komponenten A und B bestehende Reaktionsgemisch in einem Vorratsbehälter mit Druckgas beaufschlagt wird, so daß sich das zugeführte Gas im Reaktionsgemisch gelöst befindet, und daß das Reaktionsgemisch mit dem in ihm gelösten Druckgas nachfolgend aus dem Vorratsbehälter abgezogen und unter Erwärmung auf eine Temperatur von 150° bis 220° C zur Aufschäumung gebracht wird.

2. Verfahren nach Anspruch 1, **dadurch gekennzeichnet, daß** Komponenten A und B folgender Zusammensetzung verwendet werden:
| Komponente A: | |
|---|---|
| 100 g | Siliconpolymer mit mindestens zwei Doppelbindungen pro Molekül, vorzugsweise Vinylgruppen, |
| | |
| 0,2-5 g | organischer Platin-Katalysator, komplexiert mit Butinol, |
| | |
| 5-40 g | pyrogene Kieselsäure, |
| | |
| 0,05-5 g | Wasser, |
gegebenenfalls weitere Additive;
| Komponente B: | |
|---|---|
| 100 g | Siliconpolymer mit mindestens zwei Doppelbindungen pro Molekül, vorzugsweise Vinylgruppen, |
| | |
| 5-40 g | pyrogene Kieselsäure, |
| | |
| 3-20 g | Polydimethylhydrogensiloxan (SiH-Vernetzer), wobei die Komponenten A und B im Mischungsverhältnis von 1 : 1 gemischt und der Druckgasbeaufschlagung unterworfen werden. |

3. Verfahren nach Anspruch 1 oder 2, **dadurch gekennzeichnet, daß** für die beiden Komponenten A und B als Siliconpolymer Fluorsiliconpolymer verwendet wird.

4. Verfahren nach einem der Ansprüche 1 bis 3, **dadurch gekennzeichnet, daß** als Druckgas Druckluft oder Stickstoff verwendet wird.

5. Verfahren nach einem der Ansprüche 1 bis 4, **dadurch gekennzeichnet, daß** die Erwärmung des Reaktionsgemischs im Durchlauf durch einen Durchlaufofen erfolgt.

6. Verfahren nach einem der Ansprüche 1 bis 5, **dadurch gekennzeichnet, daß** die Druckgasbeaufschlagung über eine Zeitspanne von mindestens zwei Stunden und mit einem Gasdruck von mindestens 5-10 bar erfolgt.

7. Verfahren nach einem der Ansprüche 1 bis 6, **dadurch gekennzeichnet, daß** das aus dem druckdichten Vorratsbehälter gezogene Reaktionsgemisch flächig aufgetragen und unter Erwärmung zur Ausschäumung gebracht wird.

8. Verfahren nach einem der Ansprüche 1 bis 7 , **dadurch gekennzeichnet, daß** die beiden Komponenten A und B luftblasenfrei eingesetzt oder das Gemisch dieser beiden Komponenten vor der Druckgasbeaufschlagung durch Vakkumbehandlung entlüftet wird.

9. Verfahren nach einem der Ansprüche 1 bis 8, **dadurch gekennzeichnet, daß** die Vermischung der beiden Komponenten A und B unter Luftabschluß durchgeführt wird.

10. Verfahren nach einem der Ansprüche 1 bis 9, **dadurch gekennzeichnet, daß** das Reaktionsgemisch auf einer Unterlage mit oder ohne Haftvermittler zur Verschäumung gebracht wird.

11. Verfahren nach Anspruch 10, **dadurch gekennzeichnet daß** als Unterlage ein Metallblech, eine Metallfolie oder ein Gewebeband verwendet wird.

12. Verfahren nach einem der Ansprüche 1 bis 11, **dadurch g**e**kennzeichnet, daß** die Komponente A als weitere Additive, einzeln oder in Kombination, Farbpigment, einen Schaumregulator, ein Flammschutzmittel, Füllstoffe enthält.

## Claims

1. A process for producing a fine pored silicone foam, by the free-foaming method, of the two-component foamed material reaction mixture, wherein a silicone composition, containing
- a silicone polymer comprising at least two double bonds per molecule, preferably vinyl groups,
- an organic platinum catalyst,
- pyrogenic hydrated silica,
- water,
- and optionally other additives
is used as the reaction component A, and a crosslinking agent comprising polydimethyl hydrogen siloxane (SiH crosslinking agent) is used as the crosslinking component B, wherein the foamed material reaction mixture consisting of the reaction components, with the gas contained therein as a nucleating agent, is caused to foam, **characterised** in that an organic platinum catalyst complexed with butynol is used as the organic platinum catalyst of component A, whilst crosslinking component B additionally contains a silicone polymer comprising at least two double bonds per molecule, preferably vinyl groups, and pyrogenic hydrated silica, that the reaction mixture consisting of components A and B is acted upon by compressed gas in a supply vessel so that the gas fed in exists dissolved in the reaction mixture, and that the reaction mixture, with the compressed gas dissolved therein, is subsequently drawn off from the supply vessel and is caused to foam by heating to a temperature of 150° to 220°C.

2. A process according to claim 1, **characterised in that** components A and B of the following composition are used:
| Component A: | |
|---|---|
| 100 g | silicone polymer comprising at least two double bonds per molecule, preferably vinyl groups, |
| | |
| 0.2-5 g | organic platinum catalyst, complexed with butynol, |
| | |
| 5-40 g | pyrogenic hydrated silica, |
| | |
| 0.05-5 g | water, |
and optionally other additives;
| Component B: | |
|---|---|
| 100 g | silicone polymer comprising at least two double bonds per molecule, preferably vinyl groups, |
| | |
| 5-40 g | pyrogenic hydrated silica, |
| | |
| 3-20 g | polydimethyl hydrogen siloxane (SiH crosslinking agent), wherein components A and B are mixed in a mixture ratio of 1 : 1 and are subjected to the action of the compressed gas. |

3. A process according to claim 1 or 2, **characterised in that** a fluorosilicone polymer is used as the silicone polymer for the two components A and B.

4. A process according to any one of claims 1 to 3, **characterised in that** compressed air or nitrogen is used as the compressed gas.

5. A process according to any one of claims 1 to 4, **characterised in that** heating of the reaction mixture is effected on its passage through a continuous kiln.

6. A process according to any one of claims 1 to 5, **characterised in that** the compressed gas acts over a period of time of at least two hours and at a gas pressure of at least 5-10 bar.

7. A process according to any one of claims 1 to 6, **characterised in that** the reaction mixture which is drawn off from the pressure-tight supply vessel is deposited in sheet form and is caused to foam by heating.

8. A process according to any one of claims 1 to 7, **characterised in that** the two components A and B are used free from air bubbles or the mixture of these two components is deaerated by vacuum treatment before it is acted upon by the compressed gas.

9. A process according to any one of claims 1 to 8, **characterised in that** mixing of the two components A and B is effected with the exclusion of air.

10. A process according to any one of claims 1 to 9, **characterised in that** the reaction mixture is caused to foam on a support comprising one or more bonding agents.

11. A process according to claim 10, **characterised in that** a metal sheet, a metal foil or a fabric strip is used as the support.

12. A process according to any one of claims 1 to 11, **characterised in that** component A contains a colouring pigment, a foam regulator, a flame retardant and fillers as other additives, individually or in combination.

## Revendications

1. Procédé de fabrication d'une mousse de silicone à pores fins par procédé de moussage libre du mélange de réaction de mousse à deux composants, dans lequel on utilise comme composant de réaction A une pâte de silicone, contenant
- un polymère de silicone avec au moins deux doubles liaisons par molécule, de préférence des groupes vinyle,
- un catalyseur au platine organique,
- de l'acide silicique pyrogène,
- de l'eau,
- et éventuellement d'autres additifs,
et comme composant de réticulation B, un composant avec du polydiméthylhydrogènesiloxane (agent de réticulation SiH), le mélange de réaction de mousse, constitué des composants de réaction, étant amené à mousser avec le gaz qu'il contient en tant qu'agent de nucléation, caractérisé en ce que pour le catalyseur au platine organique du composant A, on utilise un catalyseur au platine organique complexé avec du butinol, tandis que le composant de réticulation B contient en supplément un polymère de silicone avec au moins deux doubles liaisons par molécule, de préférence des groupes vinyle et de l'acide silicique pyrogène, en ce que le mélange de réaction constitué des composants A et B est envoyé dans un réservoir avec gaz sous pression, de manière que le gaz envoyé se trouve dissous dans le mélange de réaction, et en ce que le mélange de réaction est soutiré ensuite du réservoir, avec le gaz sous pression dissous dans celui-ci et est amené à mousser par chauffage à une température de 150° à 220 °C.

2. Procédé selon la revendication 1, caractérisé en ce qu'on utilise des composants A et B de composition suivante :
composant A :
100 g de polymère de silicone avec au moins deux doubles liaisons par molécule, de préférence des groupes vinyle,
0,2 à 5 g de catalyseur au platine organique, complexé avec du butinol,
5 à 40 g d'acide silicique pyrogène,
0,05 à 5 g d'eau,
éventuellement d'autres additifs ;
composant B :
100 g de polymère de silicone avec au moins deux doubles liaisons par molécule, de préférence des groupes vinyle,
5 à 40 g d'acide silicique pyrogène,
3 à 20 g de polydiméthylhydrogènesiloxane (agent de réticulation SiH), les composants A et B étant mélangés dans un rapport de 1 à 1 et soumis à l'action d'un gaz sous pression.

3. Procédé selon la revendication 1 ou 2, caractérisé en ce que pour les deux composants A et B on utilise comme polymère de silicone un polymère de silicone au fluor.

4. Procédé selon l'une des revendication 1 à 3, caractérisé en ce qu'on utilise comme gaz sous pression de l'air comprimé ou de l'azote.

5. Procédé selon l'une des revendications 1 à 4, caractérisé en ce que le chauffage du mélange de réaction s'effectue par passage à travers un four continu.

6. Procédé selon l'une des revendications 1 à 5, caractérisé en ce que l'envoi de gaz sous pression s'effectue pendant un intervalle de temps d'au moins deux heures et avec une pression de gaz d'au moins 5 à 10 bar.

7. Procédé selon l'une des revendications 1 à 6, caractérisé en ce que le mélange de réaction, soutiré du réservoir résistant à la pression, est appliqué à plat et est amené à mousser par chauffage.

8. Procédé selon l'une des revendications 1 à 7, caractérisé en ce que les deux composants A et B sont utilisés sans bulles d'air ou le mélange de ces deux composants est désaéré par traitement sous vide, avant l'envoi de gaz sous pression.

9. Procédé selon l'une des revendications 1 à 8, caractérisé en ce que le mélange des deux composants A et B s'effectue sous exclusion d'air.

10. Procédé selon l'une des revendications 1 à 9, caractérisé en ce que le mélange de réaction est amené à mousser sur un support avec ou sans agent adhésif.

11. Procédé selon la revendication 10, caractérisé en ce qu'on utilise comme support une tôle métallique, une feuille métallique ou une bande tissée.

12. Procédé selon l'une des revendications 1 à 11, caractérisé en ce que le composant A contient comme autres additifs, individuellement ou en combinaison, un pigment coloré, un régulateur de mousse, un agent retardant les flammes, des charges.
